# EUROPEAN PATENT SPECIFICATION

(11) **EP 3 618 028 B1**
(45) Date of publication and mention of the grant of the patent: **06.09.2023**
(21) Application number: 19204098.8
(22) Date of filing: 20.09.2007
(51) Int. Cl.: G08G 1/017, G06K 19/077, H01Q 13/00

(54) **VEHICLE IDENTIFICATION**
FAHRZEUGIDENTIFIKATION
IDENTIFICATION DE VÉHICULE

(30) Priority: 20.09.2006 NL 1032542
(43) Date of publication of application: 04.03.2020
(62) Divisional of application: 07075820.6
(73) Proprietor: J. Knieriem B.V., 4462 ET Goes (NL)
(72) Inventor: Harinck, Marinus, 4461 MH Goes (NL)
(74) Representative: Möller, Friedrich

(56) References cited:
- WO-A1-2006/128448
- WO-A2-2008/020771
- US-A- 5 621 571
- US-A- 5 657 008
- US-A- 6 025 784

## Description

### BACKGROUND OF THE INVENTION

The invention relates to the identification of vehicles, vehicles also including vessels and airplanes.

Identification of cars may be desirable for collecting toll, such as at turnpikes or in the form of a congestion charge. Identification may also be desirable in permit systems, such as in case of access to parking lots and access to road networks (wherein for instance certain cars are only allowed to participate in traffic at specific times or on specific days. Identification of vehicles in general may be desirable in connection with tracing and preventing fraud and theft.

In those systems cars are equipped with an active or passive transponder in the form of an RFID, comprising an RFID chip having a transmitting antenna and optionally a reception antenna, with which a signal can be transmitted to and/or received from, respectively, permanently positioned detectors and transmitters, or hand terminals, connected to a processing system.

It is suggested to arrange RFIDs in the engine compartment of a car. In another proposal a printed circuit board including RFID and battery is arranged on a synthetic frame in front of a license plate. The printed circuit board is provided with a loop antenna for microwave reception and may be provided with a dipole antenna for transmission. In an alternative embodiment the loop antenna is arranged like a circumferential conductive strip in the synthetic carrier frame.

Document WO 2006/128448 A1 constitutes a relevant prior art within the meaning of Article 54(3) EPC. Documents US5 621 571 A and US 6 025 784 A represent additional relevant background to the present invention.

It is an object of the invention to provide a simple RFID system for vehicles.

It is an object of the invention to provide vehicles with an RFID in an easy way.

It is an object of the invention to provide vehicles with an RFID of sufficient range.

### SUMMARY OF THE INVENTION

From one aspect the invention provides a device for vehicle identification, comprising a license plate for a vehicle, as claimed in claim 1.

By giving the license plate itself a function such as antenna to the transponder, particularly RFID, use is made of the properties of the material that needs to be present anyway. As a result the placement becomes simple. Provisions outside of the license plate can be reduced to a minimum. Beforehand the transponder can for instance be adapted to the license plate in question. The license plate including transponder can optionally be kept in stock.

The license plate is provided with a slot shaped recess, wherein the connections are electrically coupled on both sides of the recess to the material of the license plate. In that way the plate forms a kind of loop antenna, when the slot is open at one end, or a slot antenna when the recess, as defined by the claimed invention, is bounded by a circumferential edge, as is common for slot antennas.

Occupation of space is kept limited when the transponder is situated at the location of the recess, particularly in the recess.

The transponder preferably is spaced apart from one end of the slot-shaped recess, which reduces the risk of damage.

The transponder can be situated halfway the length of the slot-shaped recess.

Alternatively the transponder can be situated outside of the centre thereof on purpose, in order to maximise the energy transfer. Because the impedance of the slot-shaped recess in the longitudinal direction of the recess varies (the impedance of the recess is at a maximum in the centre and towards the end the impedance approaches nil), the position where the transponder is electrically coupled to the license plate, is chosen such that the slot impedance substantially equals the design impedance, particularly the output impedance of the transponder. At this location a maximum power transfer can take place.

From a further aspect the invention provides an identification system for vehicles according to the invention, wherein the system furthermore comprises means for reading the transponder.

From a further aspect the invention provides a method for identifying a vehicle by means of the device of the invention, according to claim 7.

In this way the device according to the invention is able to communicate with a transmitter/receiver unit of a wireless identification system.

The aspects and measures described in this description and the claims of the application and/or shown in the drawings of this application may where possible also be used individually. Said individual aspects may be the subject of divisional patent applications relating thereto. This particularly applies to the measures and aspects described per se in the sub claims.

### SHORT DESCRIPTION OF THE DRAWINGS

The invention will be elucidated on the basis of a number of exemplary embodiments shown in the attached drawings, in which:
Figures 1 A and 1 B show a front view and a rear view, respectively, of a device according to the invention;
Figure 2 shows a schematic arrangement of a vehicle according to the invention in a system according to the invention;
Figure 2A shows a detail of figure 2; and
Figures 3 and 4 show a detail of further exemplary embodiments of a device according to the invention.

### DETAILED DESCRIPTION OF THE DRAWINGS

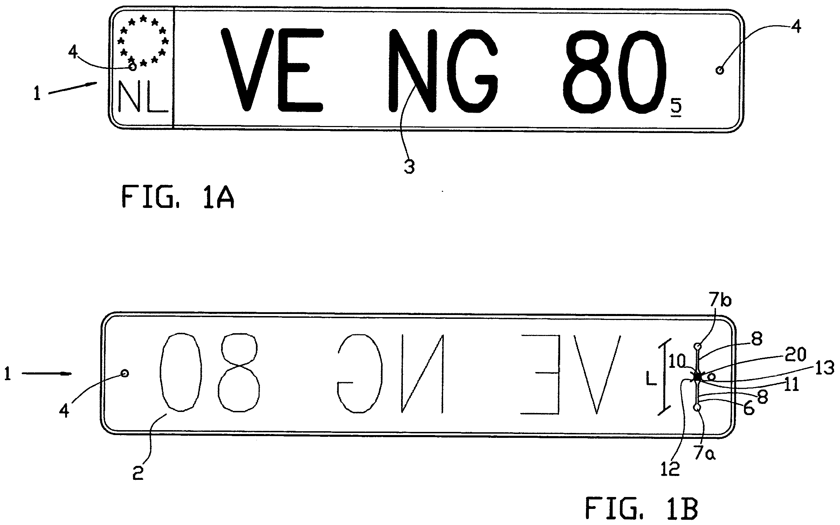

The license plate 1 of figures 1 A and 1 B has in this example been built up from several layers, namely a base plate 2 of electrically conductive material, for instance aluminium, copper or steel. At the sight side shown in figure 1 A, the plate is coated with a coating layer 5, which also provides colour to the license plate. After applying said coating, in this example identification marks 3 have been pressed in the plate 2. The license plate 1 is here furthermore provided with mounting apertures 4 with which the license plate 1 can be attached to a vehicle.

Near one transverse edge of the license plate 1 a slot 6 is left open in the material of the base plate 2, shielded by the layer 5. The slot 6 is substantially vertically oriented, and has a length L. At both ends the slot 6 ends in broadened areas 7a,b having circular edges, as defined by the claims, or, alternatively and not following within the scope of the claimed matter, oval or differently shaped edges. In between the slot 6 has mutually parallel boundary edges 8. In this example a broadening 10 is provided in the centre of the slot 6, in which broadening an RFID chip 11 is placed. With both connections 12 and 13, RFID chip 11 is electrically coupled to the material of the base plate 2. Particularly the connections on both sides of the slot 6 are electrically coupled to the material of the base plate 2.

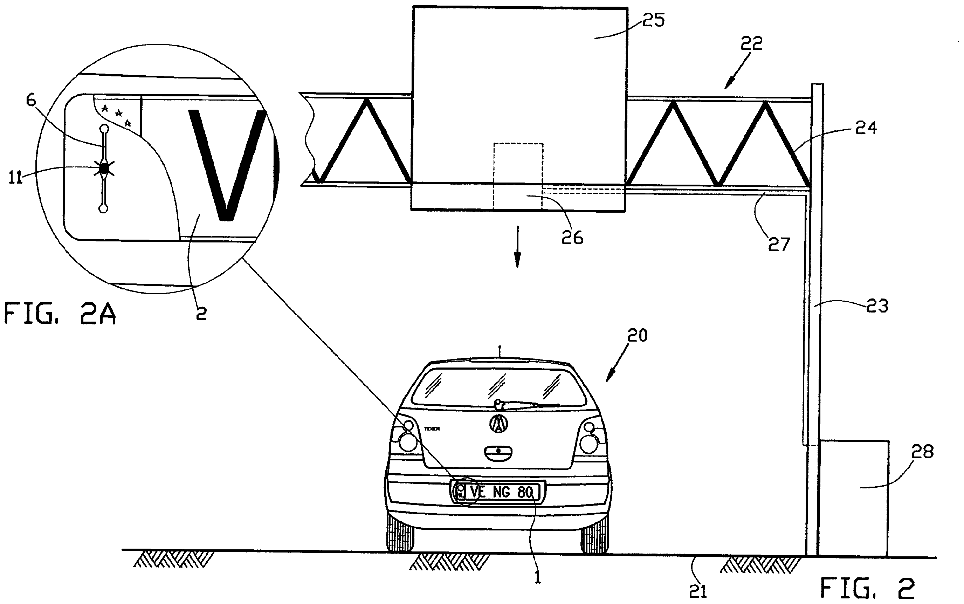

When mounted on a vehicle 20 (figure 2), the base plate 2 is shielded from view and from dirt by the layer 5, as is shown in the cut-away view in detail of figure 2A. The license plate 1 on the vehicle 20 can then be used in an identification system, see figure 2, having a portal 22 comprising a column 23 and an outrigger 24 on which for instance a route indication 25 has been arranged. Behind the route indication 25 there is a transmitter/receiver unit 26, transmitting and receiving signals in relation to the RFID on the license plate 1 of the vehicle 20. By means of the leads 27 the transmitter/receiver unit 26 is connected to a processing unit 28 of the identification system. A hand-held hand terminal (not shown) can also be used, which may be offline or able to communicate wirelessly with the processing unit 28.

By using the license plate, which may for instance have a height in the order of 1 decimetre and a length in the order of a few decimetres, a large range is possible, for instance 30 metres. The length L of the slot 6 is approximately half a wavelength of the radio waves. The frequency may be 2.4 GHz.

A vertical orientation of the slot forms the smallest limitation of the surface of the license plate that is available to the signs. By choosing the orientation and/or the shape of the slot an antenna operation can be achieved that is direction specific to a larger or lesser degree.

In case of a direction specific antenna operation an exchange of data with a transmission/reception device, placed in the specific direction with respect to the license plate, is enhanced and an exchange with transmission/reception devices placed in other directions with respect to the license plate is suppressed.

However, it is possible to have the slot extend in other directions as well, in order to increase the readability in various directions.

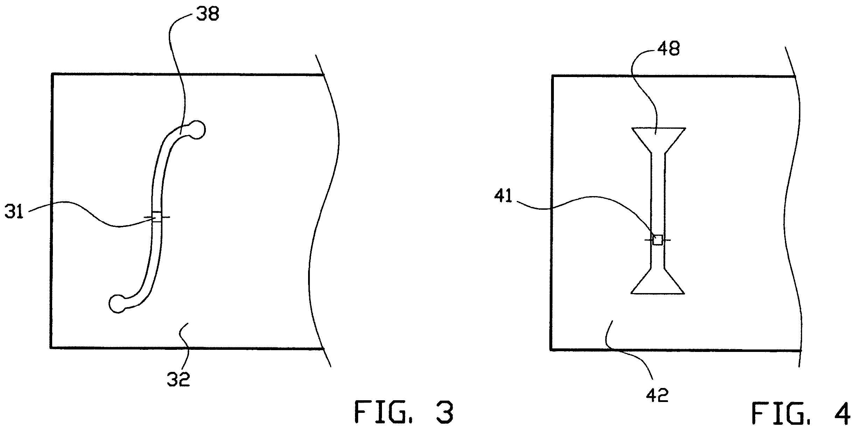

In figure 3 an exemplary embodiment is shown of a slot 38 in a license plate 32 that extends along a curved path. In this way the antenna operation of the slot 38 is less direction specific and the transponder 31 is able to exchange data more easily with transmission/reception devices that are placed at various positions with respect to the vehicle, for instance along, over or underneath the road.

In figure 4 a further exemplary embodiment is shown of a slot 48 in a license plate 42 that is adapted to have an antenna operation with a larger band width. In addition the transponder 41 is situated outside of the centre of the slot 48 at a position along the slot 48 where the impedance of the slot 48 substantially equals the output impedance of the transponder 41.

It will be clear that the above description is included to illustrate the operation of preferred embodiments of the invention and not to limit the scope of the invention. Starting from the above explanation many variations will be evident to an expert.

For instance the transponder can also be electrically coupled to a nameplate, registration sign or toll sticker of an electrically conductive material for forming a device for vehicle identification according to the invention.

## Claims

1. Device for vehicle identification, comprising a license plate for a vehicle, wherein the license plate is at least partially made of electrically conductive material wherein the license plate is provided with a slot-shaped recess and provided with a transponder, particularly an RFID chip, wherein the transponder comprises two connections (12, 13), wherein the transponder is situated at the location of the slot-shaped recess, and wherein the connections (12, 13) of the transponder are inductively coupled on both sides of the slot-shaped recess to the material of the license plate, and wherein the recess is bounded by a circumferential edge.

2. Device according to any one of the claims 1, wherein the transponder is spaced apart from one end of the slot-shaped recess.

3. Device according to claim 42, wherein the transponder is situated halfway the length of the slot-shaped recess.

4. Device according to claim 42, wherein the transponder in longitudinal direction of the slot-shaped recess is situated outside of the centre of the length of the slot-shaped recess.

5. Identification system for vehicles, wherein vehicles are provided with devices according to any one of the claims 1-4, wherein the system furthermore comprises means for reading the transponder.

6. Method for identifying a vehicle, comprising the following steps of transmitting a radio signal to the vehicle and receiving the radio signal by means of a device according to claim 1, the method comprising the transponder creating an identification signal in response to the received radio signal; transferring the identification signal from the transponder to the license plate, which is adapted to be a transmitting antenna for transmission of the identification signal, thereby the transponder transmitting the identification signal in response to the received radio signal.

## Patentansprüche

1. Vorrichtung für Fahrzeugidentifikation, umfassend ein Nummernschild für ein Fahrzeug, wobei das Nummernschild zumindest teilweise aus einem elektrisch leitfähigen Material gefertigt ist, wobei das Nummernschild mit einer schlitzförmigen Vertiefung versehen ist und mit einem Transponder, insbesondere einem RFID-Chip, versehen ist, wobei der Transponder zwei Verbindungen (12, 13) umfasst, wobei der Transponder am Ort der schlitzförmigen Vertiefung befindlich ist und wobei die Verbindungen (12, 13) des Transponders auf beiden Seiten der schlitzförmigen Vertiefung mit dem Material des Nummernschilds induktiv gekoppelt sind, und wobei die Vertiefung durch eine umlaufende Kante begrenzt ist.

2. Vorrichtung nach Anspruch 1, wobei der Transponder von einem Ende der schlitzförmigen Vertiefung beabstandet ist.

3. Vorrichtung nach Anspruch 2, wobei der Transponder auf der halben Länge der schlitzförmigen Vertiefung befindlich ist.

4. Vorrichtung nach Anspruch 2, wobei der Transponder in Längsrichtung der schlitzförmigen Vertiefung außerhalb der Mitte der Länge der schlitzförmigen Vertiefung befindlich ist.

5. Identifikationssystem für Fahrzeuge, wobei Fahrzeuge mit Vorrichtungen nach einem der Ansprüche 1-4 versehen sind, wobei das System ferner Mittel zum Lesen des Transponders umfasst.

6. Verfahren zum Identifizieren eines Fahrzeugs, das die folgenden Schritte umfasst: Senden eines Funksignals an das Fahrzeug und Empfangen des Funksignals mittels einer Vorrichtung nach Anspruch 1, wobei das Verfahren Folgendes umfasst: der Transponder erzeugt ein Identifikationssignal in Reaktion auf das empfangene Funksignal; Übertragen des Identifikationssignals vom Transponder auf das Nummernschild, das dazu angepasst ist, eine Sendeantenne für die Übertragung des Identifikationssignals zu sein, sodass, in Reaktion auf das empfangene Funksignal, der Transponder das Identifikationssignal sendet.

## Revendications

1. Dispositif d'identification de véhicule, comprenant une plaque d'immatriculation pour un véhicule, dans lequel la plaque d'immatriculation est au moins partiellement réalisée en un matériau électriquement conducteur, la plaque d'immatriculation présentant un évidement en forme de fente et étant munie d'un transpondeur, notamment d'une puce RFID, le transpondeur comprenant deux connexions (12, 13), le transpondeur étant situé à l'emplacement de l'évidement en forme de fente, et les connexions (12, 13) du transpondeur étant reliées par induction sur les deux côtés de l'évidement en forme de fente au matériau de la plaque d'immatriculation, et l'évidement étant délimité par un bord circonférentiel.

2. Dispositif selon la revendication 1, dans lequel le transpondeur est espacé d'une extrémité de l'évidement en forme de fente.

3. Dispositif selon la revendication 2, dans lequel le transpondeur est situé à mi-longueur de l'évidement en forme de fente.

4. Dispositif selon la revendication 2, dans lequel le transpondeur dans le sens longitudinal de l'évidement en forme de fente est situé à l'extérieur du centre de la longueur de l'évidement en forme de fente.

5. Système d'identification pour véhicules, dans lequel les véhicules sont équipés de dispositifs selon l'une quelconque des revendications 1 à 4, le système comprenant en outre des moyens de lecture du transpondeur.

6. Procédé d'identification d'un véhicule, comprenant les étapes suivantes, d'émission d'un signal radio vers le véhicule et de réception du signal radio au moyen d'un dispositif selon la revendication 1, le procédé comprenant le fait que le transpondeur crée un signal d'identification en réponse au signal radio reçu ; de transfert du signal d'identification depuis le transpondeur vers la plaque d'immatriculation, qui est adaptée pour être une antenne d'émission pour la transmission du signal d'identification, le transpondeur transmettant ainsi le signal d'identification en réponse au signal radio reçu.
